# EUROPEAN PATENT APPLICATION

(11) **EP 4 852 071 A1**
(43) Date of publication of application: **09.12.2026**
(21) Application number: 25748260.4
(22) Date of filing: 22.01.2025
(51) Int. Cl.: H01M 4/13, H01M 4/36, H01M 4/62

(54) **ELECTRODE**

(30) Priority: 29.01.2024 JP 2024010947
(71) Applicant: Panasonic Intellectual Property Management Co., Ltd., Kadoma-shi, Osaka 571-0057 (JP)
(72) Inventor: YAMASHITA, Hiroki, Osaka 571-0057 (JP); ORIO, Akira, Osaka 571-0057 (JP)
(74) Representative: Eisenführ Speiser
(86) International application number: PCT/JP2025/001830
(87) International publication number: WO 2025/164452

(57) **Abstract**

Provided is an electrode in which transfer failure at the time of manufacturing of an electrode mixture is suppressed. An electrode according to one embodiment of the present disclosure comprises a core material, and an electrode mixture that is deposited onto a surface of the core material. The electrode mixture includes: an active material including a first active material having a circularity of less than 0.96 in the average particle diameter, and a second active material having a circularity of 0.96 or greater in the average particle diameter; an electroconductive material; and a fibrous binder. The mixing ratio of the first active material and the second active material is within the range of 0.1:99.9 to 74.9:25.1 in terms of mass ratio.

## Description

### TECHNICAL FIELD

The present disclosure generally relates to an electrode, and more particularly to an electrode produced by a dry process.

### BACKGROUND ART

In general, an electrode of a non-aqueous electrolyte secondary battery such as a lithium-ion battery is produced by a wet process in which an electrode mixture slurry including an active material and a binder is applied to the surface of a core material of a metal foil, followed by drying and compression of the coating. In this case, there is a problem that migration, in which the binder moves, easily occurs during drying of the coating. When migration of the binder occurs, the amount of binder becomes greater on a surface side of the coating (electrode mixture layer) than on a core material side, thereby causing a non-uniform distribution of the binder in a thickness direction of the electrode mixture layer.

In recent years, a dry method has been studied in which an electrode mixture sheet is formed by rolling an electrode mixture into a sheet, and the sheet is then laminated to a core material to produce an electrode. Patent Literature 1 discloses an electrode film (electrode mixture) produced by mixing an active material, a particulate binder, and a conductive agent using a mill, then applying a large shear force at a high pressure to this mixture for a long time to fibrillate the binder.

### CITATION LIST

### PATENT LITERATURE

PATENT LITERATURE 1: Japanese Translation of PCT International Application Publication No. 2019-512872

### SUMMARY

As a result of studies, the present inventors have found that, depending on the shape of an active material, PTFE may not be dispersed but may aggregate in an electrode mixture, and transfer failure to a roll may occur so that the electrode mixture cannot be formed. The techniques disclosed in Patent Literature 1 and other known documents do not address the transfer failure of the electrode mixture, and there is still room for improvement.

It is therefore an advantage of the present disclosure to provide an electrode with suppressed transfer failure during production of an electrode mixture.

An electrode according to one aspect of the present disclosure includes a core material and an electrode mixture layered on a surface of the core material, the electrode mixture including: an active material including a first active material having a circularity at an average particle diameter of less than 0.96 and a second active material having a circularity at an average particle diameter of greater than or equal to 0.96; a conductive agent; and a fibrous binder, wherein a mixing ratio of the first active material to the second active material is in a range from 0.1:99.9 to 74.9:25.1 in terms of mass ratio.

According to one aspect of the present disclosure, transfer failure is suppressed, resulting in improved productivity of the electrode mixture.

### BRIEF DESCRIPTION OF DRAWING

FIG. 1 is a sectional view of an electrode as an example of an embodiment.
FIG. 2 is a view illustrating a mixing step in a production process of an electrode as an example of an embodiment.
FIG. 3 is a view illustrating a rolling step in a production process of an electrode as an example of an embodiment.
FIG. 4 is a view illustrating a compressing step in a production process of an electrode as an example of an embodiment.
FIG. 5 is a view illustrating a laminating step in a production process of an electrode as an example of an embodiment.

Hereinafter, embodiments of a positive electrode and a non-aqueous electrolyte secondary battery according to the present disclosure will be described in detail. The embodiments described below are merely examples, and the present disclosure is not limited to these embodiments. The drawings referred to in the description of the embodiments are schematically illustrated, and dimensional ratios of the components depicted in the drawings should be interpreted with reference to the following description.

### [Electrode]

An electrode according to the present disclosure is suitable for a non-aqueous electrolyte secondary battery, such as a lithium-ion battery, but can also be applied to a battery including an aqueous electrolyte or to a power storage device such as a capacitor. Hereinafter, the electrode for a non-aqueous electrolyte secondary battery will be described as an example (particularly when applied to a positive electrode).

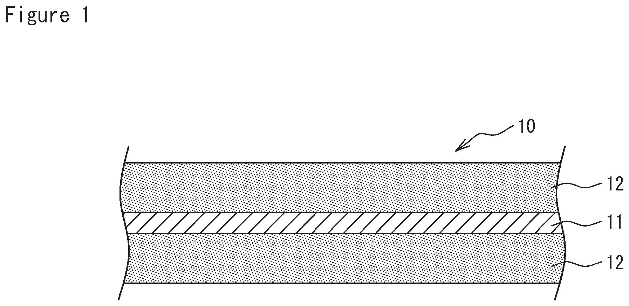

FIG. 1 is a sectional view of an electrode as an example of an embodiment. An electrode 10 includes a core material 11 and an electrode mixture 12 layered on the surface of the core material 11. As illustrated in FIG. 1, the electrode 10 may comprise an electrode mixture 12 on both surfaces of the core material 11. The electrode 10 may be an elongated electrode forming a wound-type electrode assembly or may be a rectangular electrode forming a stacked-type electrode assembly. Note that the electrode 10 can be applied to a positive electrode, a negative electrode, or both of a non-aqueous electrolyte secondary battery.

As the core material 11, a metal foil or a film having a metal layer formed on a surface of the film can be used. The thickness of the core material 11 is, for example, greater than or equal to 5 µm and less than or equal to 20 µm. In the case of a positive electrode, a metal foil containing aluminum as a main component can be used as the core material 11. In the case of a negative electrode, a metal foil containing copper as a main component can be used. As used herein, the main component means a constituent component having the highest mass ratio. The core material 11 may be an aluminum foil substantially made of 100% aluminum or may be a copper foil substantially made of 100% copper.

The electrode mixture 12 includes an active material, a conductive agent, and a fibrous binder. The active material, the conductive agent, and the fibrous binder may each be in the form of a powder. The thickness of the electrode mixture 12 is, for example, greater than or equal to 30 µm and less than or equal to 120 µm, and is preferably greater than or equal to 50 µm and less than or equal to 100 µm. Examples of the conductive agent included in the electrode mixture 12 include carbon materials such as carbon black (CB) including acetylene black (AB) and Ketjenblack, carbon nanotubes (CNTs), and graphite. The particle diameter of the conductive agent is, for example, greater than or equal to 0.01 µm and less than or equal to 0.1 µm. Accordingly, the conductive agent can enter and adhere to a depression on the surface of the positive electrode active material. A content rate of the conductive agent in the electrode mixture 12 can be, for example, greater than or equal to 0.5 mass% and less than or equal to 5.0 mass%.

As an active material of the positive electrode (positive electrode active material), a lithium-transition metal composite oxide is generally used. Examples of metal elements contained in the lithium-transition metal composite oxide include Ni, Co, Mn, Al, B, Mg, Ti, V, Cr, Fe, Cu, Zn, Ga, Sr, Zr, Nb, In, Sn, Ta, and W, among which at least one selected from Ni, Co, and Mn is preferably contained. As an active material of the negative electrode (negative electrode active material), a carbon-based active material such as natural graphite including flake graphite, massive graphite, and earthy graphite, or artificial graphite including massive artificial graphite (MAG) and graphitized mesophase carbon microbeads (MCMBs) is used. A Si-based active material that alloys with lithium may also be used as the negative electrode active material. The active material is a main component of the electrode mixture 12, and a content rate of the active material in the electrode mixture 12 is preferably greater than or equal to 85 mass% and less than or equal to 99 mass%, and more preferably greater than or equal to 90 mass% and less than or equal to 99 mass%.

The active material includes a first active material having a circularity at an average particle diameter of less than 0.96 and a second active material having a circularity at an average particle diameter of greater than or equal to 0.96. The larger the circularity, the closer the particle shape is to a sphere. When the circularity is 1, the particle is considered perfectly spherical. The circularity is calculated from a particle image obtained by irradiating a sample flow with strobe light after placing a sample in a measurement system. A circumference of a circle having the same area as the particle image and a circumference of the particle image are determined through image processing of the particle image obtained by measuring the particle shape, and the circularity is determined by the following equation: 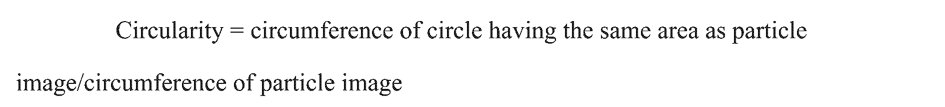 Circularity = circumference of circle having the same area as particle image/circumference of particle image

As used herein, the average particle diameter refers to a volume-based median diameter (D50). The D50 means the particle diameter at which the cumulative frequency in the volume-based particle size distribution reaches 50% from the smaller particle side, which is also referred to as the median diameter. The particle size distribution of the active material can be measured using a laser diffraction particle size distribution measuring device (e.g., MT3000II, manufactured by MicrotracBEL Corp.), with water used as a dispersion medium.

An average particle diameter of the first active material may be smaller than an average particle diameter of the second active material. The average particle diameter of the first active material is, for example, in a range from 1 µm to 10 µm, and the average particle diameter of the second active material is, for example, in a range from 10 µm to 20 µm. By including the first active material and the second active material having different average particle diameters, the electrode mixture can achieve a higher filling ratio of active materials, thereby increasing the density of the electrode mixture.

A mixing ratio of the first active material to the second active material is preferably in a range from 0.1:99.9 to 74.9:25.1 in terms of mass ratio, more preferably in a range from 0.1:99.9 to 50:50, and still more preferably in a range from 0.1:99.9 to 25:75. By mixing the first active material and the second active material satisfying the above circularities within this range, transfer failure is suppressed, resulting in improved productivity of the electrode mixture. The active material included in the electrode mixture may consist of the first active material and the second active material, or may further contain an active material other than the first active material and the second active material.

The first active material is composed of, for example, single crystal particles, and the second active material is composed of, for example, polycrystalline particles. A single crystal particle refers to a particle formed by a single crystal structure, and a polycrystalline particle refers to a secondary particle formed by aggregation of single crystal particles (primary particles) having a small particle diameter. The particle diameter of the primary particles forming the secondary particles is, for example, greater than or equal to 0.05 µm and less than or equal to 1 µm. The particle diameter of the primary particles is measured as the diameter of a circumscribed circle in particle images observed by scanning electron microscopy (SEM).

In general, single crystal particles have a lower circularity than polycrystalline particles, and when a content of single crystal particles in the electrode mixture is increased, transfer failure may occur during production of the electrode mixture, resulting in a decrease in productivity. On the other hand, when charging and discharging of a battery are repeated, polycrystalline particles may cause cracks between primary particles, resulting in a decrease in battery capacity and a decrease in battery durability. Mixing the first active material, which is composed of single crystal particles, and the second active material, which is composed of polycrystalline particles, at the above ratio, may improve battery durability while specifically improving productivity of the electrode mixture.

The fibrous binder included in the electrode mixture 12 includes, for example, fibrillated polytetrafluoroethylene (PTFE). The fibrous binder is in the form of a powder in a dry state and is not in a state of being dispersed in a dispersion such as water. Thus, the electrode mixture can be produced by a dry process described later. The electrode mixture 12 may further include, in addition to the fibrous binder, a binder that is not fibrillated, such as polyvinylidene fluoride (PVdF).

A fibrillation degree of PTFE is preferably greater than 1.3 mass%, and more preferably greater than or equal to 2.5 mass%. Thus, transfer failure during production of the electrode mixture can be more significantly suppressed. The upper limit of the fibrillation degree of PTFE is not particularly limited, and is, for example, 10 mass%. The fibrillation degree of PTFE can be calculated as follows.

### <Method for Calculating Fibrillation Degree of PTFE>

(1) A surface of the electrode mixture is observed by energy dispersive X-ray spectroscopy (EDX) to obtain a mapping image in which a region where carbon elements are present (C region), a region where oxygen elements are present (O region), a region where fluorine elements are present (F region), and a region where transition metal elements (e.g., Ni) included in the active material are present (hereinafter referred to as Ni region) are mapped. A magnification of EDX is adjusted to obtain an image having a size of 300 µm in length × 400 µm in width.
(2) The mapping image is imported into a computer, and a first composite image in which an overlapping portion of the Ni region, the C region, and the O region is defined as a "region where the active material and the conductive agent are present (region where an object is present)", a second composite image in which an overlapping portion of the Ni region, the C region, the F region, and the O region is defined as a "region where fibrillated PTFE and the conductive agent are present on the active material (region where an object is present)", and a third composite image in which an overlapping portion of the C region, the F region, and the O region is defined as a "region where aggregated PTFE and the conductive agent are present (region where an object is present)" are obtained using image analysis software (e.g., ImageJ manufactured by the National Institutes of Health).
(3) Using the image analysis software, the number of pixels occupied by the "region where an object is present" is calculated for each of the first to third composite images, and an area ratio of a fibrillated portion is calculated by the following equation. 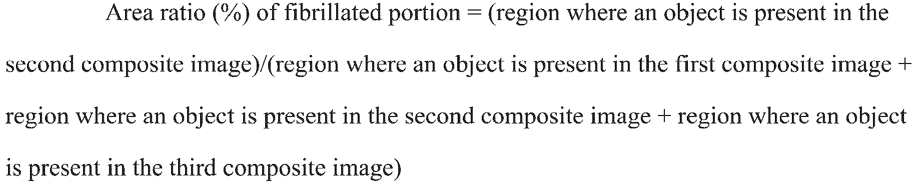 Area ratio (%) of fibrillated portion = (region where an object is present in the second composite image)/(region where an object is present in the first composite image + region where an object is present in the second composite image + region where an object is present in the third composite image)
(4) In the second composite image, a ratio of fluorine elements to all elements is calculated to obtain an "amount (mass%) of F present in the fibrillated portion".
(5) The fibrillation degree of PTFE is calculated based on "the area ratio (%) of the fibrillated portion" and "the amount (mass%) of F present in the fibrillated portion" obtained above according to the following equation. 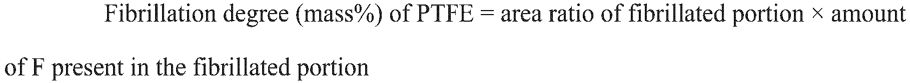 Fibrillation degree (mass%) of PTFE = area ratio of fibrillated portion × amount of F present in the fibrillated portion
(6) The above (1) to (5) are carried out for two different locations of the electrode mixture, and the average of the resulting values is taken as the fibrillation degree (mass%) of PTFE in the electrode mixture.

A content rate of the fibrous binder in the electrode mixture 12 is, for example, greater than or equal to 0.1 mass% and less than or equal to 3 mass% with respect to 100 parts by mass of the active material. The fibrous binder, which adheres to particle surfaces of the active material, is entangled with the active material. In other words, the active material is held by the fibrous binder existing in a mesh form.

The fibrous binder can be produced by fibrillating a PTFE raw material (PTFE particles) belonging to a fine powder that can be fibrillated (fiberized) using a dry pulverizer such as a jet mill pulverizer. The PTFE raw material may be secondary particles. The particle diameter of the PTFE raw material is, for example, greater than or equal to 100 µm and less than or equal to 700 µm, preferably greater than or equal to 100 µm and less than or equal to 500 µm, and more preferably greater than or equal to 100 µm and less than or equal to 400 µm. The particle diameter of the PTFE raw material can be determined by observing particles of the PTFE raw material with a SEM. Specifically, the outer shape of 100 randomly selected particles is specified, the long diameter (longest diameter) of each of the 100 particles is determined to define the average thereof as the particle diameter of the PTFE raw material.

The median diameter (D50) of the fibrous binder is preferably greater than or equal to 2 µm and less than or equal to 20 µm. The expression that the median diameter of the fibrous binder is greater than or equal to 2 µm and less than or equal to 20 µm means that the fibrous binder has a size that is micronized with respect to the PTFE particles of the PTFE raw material.

When the electrode mixture 12 is divided into three equal parts in the thickness direction to form a first region, a second region, and a third region from the core material 11 side, the content (a) of the fibrous binder in the first region, the content (b) of the fibrous binder in the second region, and the content (c) of the fibrous binder in the third region preferably satisfy (c - a)/(a + b + c) ≤ ±10%, more preferably satisfy (c - a)/(a + b + c) ≤ ±5%. Thus, the fibrous binder can be present substantially uniformly throughout the electrode mixture 12 without being localized in a part of the electrode mixture 12.

### [Method for Producing Electrode]

Hereinafter, a method for producing an electrode 10 will be described. In the following, a method for producing a positive electrode will be illustrated, but this production method can be similarly applied to production of a negative electrode. In the case of a negative electrode, a negative electrode active material is used instead of the positive electrode active material.

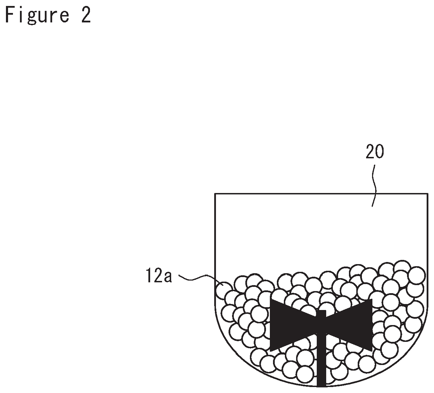

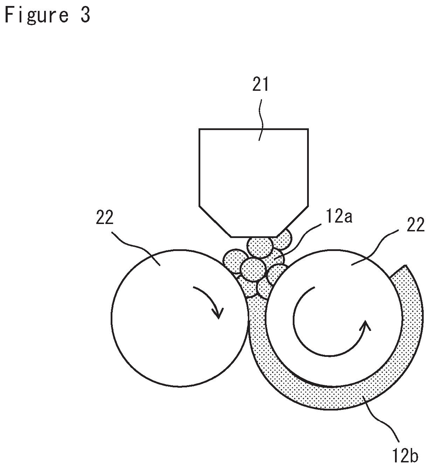

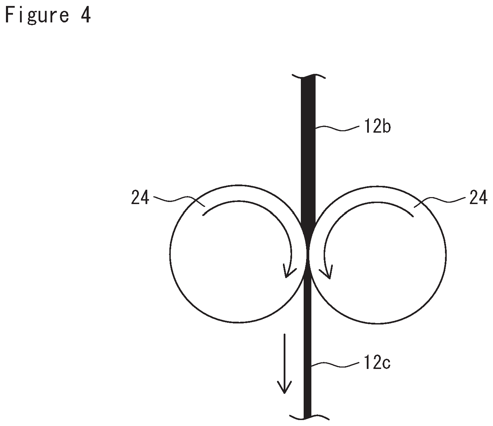

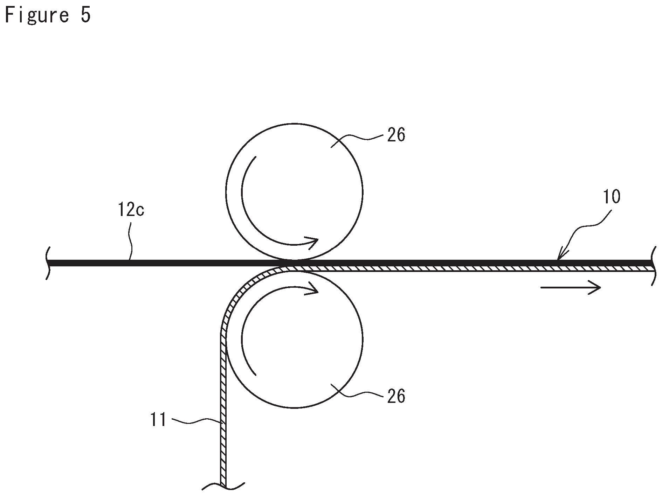

FIGS. 2 to 5 are views schematically illustrating a production process of the electrode 10 as an example of the embodiment. The method for producing an electrode 10 includes a mixing step illustrated in FIG. 2, a rolling step illustrated in FIG. 3, a compressing step illustrated in FIG. 4, and a laminating step illustrated in FIG. 5. In the mixing step, an active material and a fibrous binder are mixed to produce electrode mixture particles 12a having a solid content concentration of substantially 100%. In the rolling step, the electrode mixture particles 12a are rolled into a sheet to produce an electrode mixture sheet 12b. In the compressing step, the electrode mixture sheet 12b is compressed to produce a high-density electrode mixture sheet 12c. In the laminating step, the high-density electrode mixture sheet 12c is laminated to the core material 11 to produce the electrode.

The method for producing an electrode 10 is a dry process of producing the electrode 10 using the electrode mixture 12 having a solid content concentration of substantially 100%. The dry process refers to a process of mixing active material particles with the binder particles without using a solvent, that is, mixing the active material and the binder in a state where the solid content concentration is substantially 100%. The method for producing an electrode 10 according to the present disclosure does not require the use of a solvent, unlike a conventional method for producing an electrode 10. The expression "does not require the use of a solvent" means not only that the solvent is unnecessary as a raw material, but also that a drying step of the solvent is unnecessary, and exhaust equipment or the like for the drying step can also be omitted.

In the mixing step illustrated in FIG. 2, raw materials such as the active material, the fibrous binder, and the conductive agent are mixed in a mixer 20 to produce the electrode mixture particles 12a. When the active material includes the first active material and the second active material, PTFE is appropriately fibrillated, and transfer failure to rolls in the rolling step described later can be suppressed. As the mixer 20, for example, a conventionally known mechanical stirring mixer can be used. Specific examples of the suitable mixer 20 include a cutter mill, a pin mill, a bead mill, a fine particle compounding device (device in which a shear force is generated between a rotor having a special shape that rotates at a high speed inside a tank and an impact plate), a granulating machine, and a kneading machine such as a twin-screw extrusion kneading machine or a planetary mixer, which are devices capable of applying a mechanical shear force. The mixer 20 is preferably a cutter mill, a fine particle compounding device, a granulating machine, or a twin-screw extrusion kneading machine. Thus, the fibrous binder can be further fibrillated while mixing the raw material. The processing time (time for applying shear force to the material) of the mixing step is preferably within several minutes and may be, for example, greater than or equal to 0.5 minutes and less than or equal to 10 minutes. If the processing time is too long, the amount of conductive agent incorporated into the fibrous binder increases. In this case, the conductivity of the electrode mixture sheet significantly deteriorates, resulting in increased resistance and adversely affecting the battery characteristics.

The mixing step may include mixing the active material and the conductive agent to produce a coated active material; and mixing the coated active material with the fibrous binder. The use of the coated active material produced by mixing the active material with the conductive agent can reduce the time for mixing the coated active material with the fibrous binder. Thus, the amount of the conductive agent incorporated into the fibrous binder can be reduced. The surface of the coated active material has irregularities, and the conductive agent preferably enters and adheres to a depression of the irregularities. Thus, during a mixing process of the coated active material and the fibrous binder, the conductive agent on the surface of the coated active material is less likely to be taken by the fibrous binder.

As a method of dry-mixing the active material and the conductive agent, a mechanofusion method may be used, for example. The mechanofusion method is a dry-processing method performed in a mechanofusion reactor having a tubular chamber comprising a compression tool inside and rotating at a high speed. By placing the conductive agent and the active material in the chamber and rotating the chamber, the particles are pressed against each other and against a chamber wall. The use of a compression tool and rotating at a high speed to generate centrifugal forces facilitates the adhesive bonding between the conductive agent and the active material. Examples of the mechanofusion reactor include the "Nobilta" (R) pulverizer or the "Mechanofusion" (R) pulverizer manufactured by Hosokawa Micron Corporation (Japan), the "Hybridizer" (R) pulverizer manufactured by Nara Machinery Co., Ltd., the "Balance Gran" manufactured by Freund-Turbo Corporation, and "COMPOSI" manufactured by Nippon Coke & Engineering Co., Ltd.

Next, in the rolling step, as illustrated in FIG. 3, the electrode mixture particles 12a supplied from a hopper 21 are rolled using two rolls 22 and formed into a sheet. The two rolls 22 are disposed with a predetermined gap to rotate in the same direction. The electrode mixture particles 12a, supplied into a gap between the two rolls 22, are compressed by the two rolls 22 and stretched into a sheet. At this time, if an electrode mixture sheet 12b does not adhere to one of the rolls 22, the electrode mixture sheet 12b cannot be properly conveyed to a subsequent step, and therefore the electrode mixture sheet 12b needs to have transferability to the rolls 22. The two rolls 22 have, for example, the same roll diameters. The resulting electrode mixture sheet 12b may be passed multiple times through the gap between the two rolls 22, and may be stretched one or more times using another roll having a different roll diameter, peripheral speed, gap, and the like. The rolls may be heated to thermally press the electrode mixture particles 12a.

The thickness of the electrode mixture sheet 12b can be controlled, for example, by the gap between the two rolls 22, the peripheral speed, or the number of stretching processes. In the rolling step, the electrode mixture particles 12a are preferably formed into a sheet using the two rolls 22 having peripheral speeds differing by a factor of greater than or equal to two. By making the peripheral speeds of the two rolls 22 different, for example, the electrode mixture sheet 12b can be thinned easily, leading to improved productivity.

Next, in the compressing step, as illustrated in FIG. 4, the electrode mixture sheet 12b is compressed using two rolls 24 to produce a high-density electrode mixture sheet 12c. The two rolls 24 have, for example, the same roll diameter, which are disposed with a predetermined gap, and rotate in the same direction at the same peripheral speed. The linear pressure by the two rolls 24 may be, for example, greater than or equal to 1 t/cm and less than or equal to 5 t/cm. The temperature of the two rolls 24 is not particularly limited and may be, for example, room temperature. The active material density of the high-density electrode mixture sheet 12c is, for example, greater than or equal to 3.6 g/cm³ and less than or equal to 4.0 g/cm³.

Next, in the laminating step, as illustrated in FIG. 5, the high-density electrode mixture sheet 12c is laminated to the core material 11 to obtain an electrode 10 in which the mixture layer composed of the electrode mixture 12 is provided on the surface of the core material 11. Although FIG. 5 illustrates the electrode mixture 12 joined to only one surface of the core material 11, the electrode mixture 12 is preferably joined to both surfaces of the core material 11. Two sheets of the electrode mixture 12 may be joined simultaneously to both surfaces of the core material 11, or one sheet may be joined to one surface of the core material 11 and then the other sheet may be joined to the other surface.

In the laminating step, the high-density electrode mixture sheet 12c is laminated to the surface of the core material 11 using two rolls 26. The two rolls 26 have, for example, the same roll diameter, which are disposed with a predetermined gap, and rotate in the same direction at the same peripheral speed. The temperature of the two rolls 26 is, for example, greater than or equal to 50°C and less than or equal to 300°C. The linear pressure applied by the two rolls 26 is preferably greater than or equal to 0.1 t/cm and less than or equal to 2 t/cm, and more preferably greater than or equal to 0.2 t/cm and less than or equal to 1 t/cm.

### EXAMPLES

Hereinafter, the present disclosure will be described in more detail with reference to Examples, but the present disclosure is not limited to these Examples.

### <Example 1>

### [Production of Positive Electrode Mixture Particle (Mixing Step)]

As a first active material, a lithium-transition metal composite oxide of an NCM system (Ni-Co-Mn system) having an average particle diameter (D50) of 4.5 µm and a circularity at the average particle diameter of 0.950 was used. Using NOB300-Nobilta (R) manufactured by Hosokawa Micron Corporation, 100 mass parts of the lithium-transition metal composite oxide and 0.9 mass parts of carbon black (CB) were mixed for 5 minutes in a Nobilta pulverizer to produce a carbon-coated first active material. As a second active material, a lithium-transition metal composite oxide of an NCA system (Ni-Co-Al system) having an average particle diameter (D50) of 11.4 µm and a circularity at the average particle diameter of 0.972 was used. In the same manner as the first active material, a surface of the second active material was coated with CB to produce a carbon-coated second active material.

Next, the carbon-coated first active material and the carbon-coated second active material were mixed at a mass ratio of 25:75 to produce a carbon-coated positive electrode active material. The carbon-coated positive electrode active material and a fibrous binder were charged into a mixer (Wonder Crusher manufactured by Osaka Chemical Co., Ltd.) at a mass ratio of 100.9:0.8 and mixed at room temperature at a rotation speed corresponding to memory 3 for 2 minutes. Note that the maximum rotation speed of the Wonder Crusher at memory setting 10 is 28,000 rpm. The resulting positive electrode mixture particles had a solid content concentration of 100%.

### [Production of Positive Electrode Mixture Sheet (Rolling Step)]

The resulting positive electrode mixture particles were passed between two rolls and rolled to produce a positive electrode mixture sheet. The width of a hopper for supplying the positive electrode mixture particles was 110 mm. A gap between the two rolls was set to 500 µm, and a pressure between the two rolls was set to 0.5 t. The peripheral speed ratio was set to 1:4 by setting the respective speeds of the two rolls to 2.5 m/min and 10 m/min.

### [Evaluation of Transferability]

Transferability of the produced positive electrode mixture sheet was visually evaluated based on the following evaluation criteria.

Good: Greater than or equal to 90% of the positive electrode mixture sheet is transferred to the roll surface.

Acceptable: Greater than or equal to 75% of the positive electrode mixture sheet is transferred to the roll surface.

Poor: Less than 75% of the positive electrode mixture sheet is transferred to the roll surface.

### <Example 2>

In the mixing step, a positive electrode mixture sheet was produced and evaluated in the same manner as in Example 1, except that the mixing ratio of the carbon-coated first active material to the carbon-coated second active material was changed to 50:50 in terms of mass ratio.

### <Comparative Example 1>

As the carbon-coated positive electrode active material, only the carbon-coated second active material was used. That is, the mixing ratio of the carbon-coated first active material to the carbon-coated second active material was changed to 100:0 in terms of mass ratio. Except for this, a positive electrode mixture sheet was produced and evaluated in the same manner as in Example 1.

### <Comparative Example 2>

In the mixing step, a positive electrode mixture sheet was produced and evaluated in the same manner as in Example 1, except that the mixing ratio of the carbon-coated first active material to the carbon-coated second active material was changed to 75:25 in terms of mass ratio.

### <Reference Example>

As the carbon-coated positive electrode active material, only the carbon-coated second active material was used. That is, the mixing ratio of the carbon-coated first active material to the carbon-coated second active material was changed to 0:100 in terms of mass ratio. Except for this, a positive electrode mixture sheet was produced and evaluated in the same manner as in Example 1.

Table 1 shows the evaluation results and fibrillation degree of PTFE for Example Examples, Comparative Examples, and Reference Example.

**[Table 1]**

| | Circularity | | Mixing ratio (first:second) | Fibrillation degree [mass%] | Transferability |
|---|---|---|---|---|---|
| | First | Second | | | |
| Example 1 | 0.950 | 0.972 | 25:75 | 4.0 | Good |
| Example 2 | 0.950 | 0.972 | 50:50 | 2.4 | Acceptable |
| Comparative Example 1 | 0.950 | - | 100:0 | 1.3 | Poor |
| Comparative Example 2 | 0.950 | 0.972 | 75:25 | 1.2 | Poor |
| Reference Example | - | 0.972 | 0:100 | 3.7 | Good |

As shown in Table 1, the positive electrode mixture sheets of Examples exhibited better transferability than those of Comparative Examples. The fibrillation degree in Examples was larger than that in Comparative Examples, and a good correlation was obtained between the fibrillation degree of PTFE and the transferability of the positive electrode mixture sheet. Note that the positive electrode mixture sheet of Reference Example exhibited good transferability but lacked single crystal particles, resulting in poor durability of the battery as compared with the Example.

The present disclosure will be further described with reference to embodiments below.

### Constitution 1:

An electrode, including:
a core material; and
an electrode mixture layered on a surface of the core material,
the electrode mixture including:
   an active material including a first active material having a circularity at an average particle diameter of less than 0.96 and a second active material having a circularity at an average particle diameter of greater than or equal to 0.96;
   a conductive agent; and
   a fibrous binder,
wherein a mixing ratio of the first active material to the second active material is in a range from 0.1:99.9 to 74.9:25.1 in terms of mass ratio.

### Constitution 2:

The electrode according to Constitution 1, wherein
the fibrous binder includes polytetrafluoroethylene, and
a fibrillation degree of the polytetrafluoroethylene is greater than 1.3 mass%.

### Constitution 3:

The electrode according to Constitution 1, wherein
the fibrous binder includes polytetrafluoroethylene, and
a fibrillation degree of the polytetrafluoroethylene is greater than or equal to 2.5 mass%.

### Constitution 4:

The electrode according to any one of Constitutions 1 to 3, wherein
the first active material is composed of single crystal particles, and
the second active material is composed of polycrystalline particles.

### Constitution 5:

The electrode according to any one of Constitutions 1 to 4, wherein the average particle diameter of the first active material is smaller than the average particle diameter of the second active material.

### Constitution 6:

The electrode according to any one of Constitutions 1 to 5, wherein when the electrode mixture is divided into three equal parts in a thickness direction to form a first region, a second region, and a third region from a core material side, a content (a) of the fibrous binder in the first region, a content (b) of the fibrous binder in the second region, and a content (c) of the fibrous binder in the third region satisfy (c - a)/(a + b + c) ≤ ±10%.

### REFERENCE SIGNS LIST

10 Electrode, 11 Core material, 12 Electrode mixture, 12a Electrode mixture particle, 12b Electrode mixture sheet, 12c High-density electrode mixture sheet, 14 Active material, 20 Mixer, 21 Hopper, 22,24,26 Roll

## Claims

1. An electrode, including:
a core material; and
an electrode mixture layered on a surface of the core material,
the electrode mixture including:
an active material including a first active material having a circularity at an average particle diameter of less than 0.96 and a second active material having a circularity at an average particle diameter of greater than or equal to 0.96;
a conductive agent; and
a fibrous binder,
wherein a mixing ratio of the first active material to the second active material is in a range from 0.1:99.9 to 74.9:25.1 in terms of mass ratio.

2. The electrode according to claim 1, wherein
the fibrous binder includes polytetrafluoroethylene, and
a fibrillation degree of the polytetrafluoroethylene is greater than 1.3 mass%.

3. The electrode according to claim 1, wherein
the fibrous binder includes polytetrafluoroethylene, and
a fibrillation degree of the polytetrafluoroethylene is greater than or equal to 2.5 mass%.

4. The electrode according to claim 1, wherein
the first active material is composed of single crystal particles, and
the second active material is composed of polycrystalline particles.

5. The electrode according to claim 1, wherein the average particle diameter of the first active material is smaller than the average particle diameter of the second active material.

6. The electrode according to claim 1, wherein when the electrode mixture is divided into three equal parts in a thickness direction to form a first region, a second region, and a third region from a core material side, a content (a) of the fibrous binder in the first region, a content (b) of the fibrous binder in the second region, and a content (c) of the fibrous binder in the third region satisfy (c - a)/(a + b + c) ≤ ±10%.
